# EUROPÄISCHE PATENTSCHRIFT

(11) **EP 0 618 393 B1**
(45) Veröffentlichungstag und Bekanntmachung des Hinweises auf die Patenterteilung: **11.09.1996**
(21) Anmeldenummer: 94104028.9
(22) Anmeldetag: 16.03.1994
(51) Int. Cl.: F16L 37/04, F16L 37/084

(54) **Kupplungseinrichtung für Schlauch- und/oder Rohrleitungen**
Coupling device for hoses and/or circuits
Dispositif de raccordement pour tuyaux flexibles et/ou tuyaux rigides

(30) Priorität: 30.03.1993 DE 4310370
(43) Veröffentlichungstag der Anmeldung: 05.10.1994
(73) Patentinhaber: ARMATURENFABRIK HERMANN VOSS GMBH & CO., D-51688 Wipperfürth (DE)
(72) Erfinder: Brandt, Josef, D-51688 Wipperfürth (DE)
(74) Vertreter: Patentanwälte Dr. Solf & Zapf

(56) Entgegenhaltungen:
- EP-A- 0 262 287
- EP-A- 0 382 484
- WO-A-91/02919
- US-A- 3 394 954

## Beschreibung

Die vorliegende Erfindung betrifft eine Kupplungseinrichtung für Schlauch- und/oder Rohrleitungen, insbesondere für Wandungsdurchführungen von Druckmittelleitungen, mit mindestens einer aus zwei mit den Leitungen verbindbaren Kupplungsteilen, nämlich einem Steckerteil und einem Muffenteil, bestehenden Steckkupplung sowie mit zwei miteinander in einer im wesentlichen parallelen Anordnung verbindbaren Kupplungsplatten, wobei die Kupplungsteile der bzw. jeder Steckkupplung derart in fluchtend gegenüberliegenden Aufnahmeöffnungen der Kupplungsplatten sitzen, daß sie durch Verbinden der Kupplungsplatten dichtend in Fügerichtung ineinandergesteckt und in dieser Kupplungslage arretiert werden.

Solche Kupplungseinrichtungen der gattungsgemäßen Art besitzen zumeist mehrere Steckkupplungen und sind daher auch unter der Bezeichnung "Mehrfachkupplungsplatten" bekannt; sie werden vor allem für Wandungsdurchführungen verwendet, wobei die Kupplungsplatten im Bereich einer Öffnung z.B. einer Fahrzeugwand unter randlicher Zwischenlage dieser Wand und üblicherweise auch eines Dichtungselementes gegeneinander verspannt werden. Hierbei wirken die Kupplungsplatten mit den Kupplungsteilen der (jeder) Steckkupplung nach Art einer Flanschverbindung zusammen, indem jedes Kupplungsteil einen äußeren Ringsteg aufweist und die Kupplungsteile über diese Ringstege und über im Bereich der Aufnahmeöffnungen gebildete Ringschultern durch Verspannen der Kupplungsplatten zusammengehalten werden. Bei dieser Ausführung ist nun aber nachteilig, daß die Kupplungsteile aufgrund ihrer äußeren Ringstege von den einander Zugekehrten Kupplungsseiten der Kupplungsplatten her montiert, d.h. in die Aufnahmeöffnungen eingesteckt werden müssen, während die zu verbindenden Leitungen von den Außenseiten her zugeführt werden. Dies führt nun zu einer sehr umständlichen sowie zeit- und arbeitsaufwendigen Montage, da die Leitungen erst beim eigentlichen Montieren der Kupplungseinrichtung an die Kupplungsteile angeschlossen werden können. Hierzu wird jedes Leitungsende zunächst durch die jeweilige Aufnahmeöffnung der Kupplungsplatte hindurchgesteckt und dann mit dem Kupplungsteil verbunden. Erst dann kann das Kupplungsteil von der Kupplungsseite her in die Aufnahmeöffnung eingesetzt werden. Die so in den Aufnahmeöffnungen sitzenden Kupplungsteile werden dann durch Zusammenfügen der Kupplungsplatten steckverbunden und unlösbar fixiert.

Der vorliegenden Erfindung liegt nun die Aufgabe zugrunde, ausgehend von diesem Stand der Technik eine Kupplungseinrichtung der gattungsgemäßen Art zu schaffen, die eine wesentlich vereinfachte, rationellere Montage gestattet.

Erfindungsgemäß wird dies dadurch erreicht, daß jedes Kupplungsteil über derart ausgebildete Rastmittel in der zugehörigen Aufnahmeöffnung der jeweiligen Kupplungsplatte fixiert wird, daß es einerseits bei getrennten Kupplungsplatten in die entsprechende Aufnahmeöffnung der jeweiligen Kupplungsplatte von deren der anderen Kupplungsplatte abgekehrten Rückseite her rastend und lösbar einsteckbar sowie andererseits im verbundenen Zustand der Kupplungsplatten durch insbesondere selbsttätiges Sperren der Rastmittel unlösbar gehalten ist.

Durch diese vorteilhafte Ausgestaltung können die Leitungen bereits vor der eigentlichen Montage der Kupplungseinrichtung an den Teilen der Steckkupplung angeschlossen (vormontiert) werden, denn die Kupplungsteile werden ja erfindungsgemäß jeweils von der Rückseite der Kupplungsplatte her in die Aufnahmeöffnung eingesteckt und dabei über die Rastmittel lösbar vorfixiert. Durch Zusammenfügen der beiden Kupplungsplatten werden dann einerseits die Kupplungsteile miteinander steckverbunden, andererseits erfolgt aber erfindungsgemäß auch eine selbsttätige Sperrung der Rastmittel derart, daß im verbundenen Zustand der Kupplungsplatten die Kupplungsteile praktisch unlösbar durch einen axialen Formschluß oder zumindest Kraftformschluß gehalten werden. Die Verbindung kann aber vorteilhafterweise jederzeit auf Wunsch wieder gelöst werden, denn nach Trennen der Kupplungsplatten wird die gegenseitige Sperrung der Rastmittel aufgehoben, so daß die Kupplungsteile wieder aus den Aufnahmeöffnungen herausgezogen werden können. Auch hierbei können - im Gegensatz zum Stand der Technik - die Leitungen an den Kupplungsteilen angeschlossen bleiben.

Weitere vorteilhafte Ausgestaltungsmerkmale der Erfindung sind in den Unteransprüchen sowie in der folgenden Beschreibung enthalten.

Anhand eines in der Zeichnung veranschaulichten, bevorzugten Ausführungsbeispiels soll die Erfindung nun näher erläutert werden. In jeweils einer Axialschnittdarstellung eines Teilbereichs einer erfindungsgemäßen Kupplungseinrichtung zeigen:
- Fig. 1: den nicht montierten Zustand ("Explosionsdarstellung") der Komponenten in lagerichtiger Zuordnung vor bzw. nach Montage,
- Fig. 2: einen Vor- bzw. Zwischenmontagezustand der Komponenten und
- Fig. 3: den fertig montierten Zustand der erfindungsgemäßen Kupplungseinrichtung.

In den verschiedenen Figuren der Zeichnung sind gleiche Teile stets mit den gleichen Bezugszeichen versehen, so daß jede eventuell nur einmal unter Bezugnahme auf eine der Zeichnungsfiguren vorkommende Beschreibung eines Teils analog auch bezüglich der anderen Zeichnungsfiguren gilt, in denen dieses Teil mit dem entsprechenden Bezugszeichen ebenfalls zu erkennen ist.

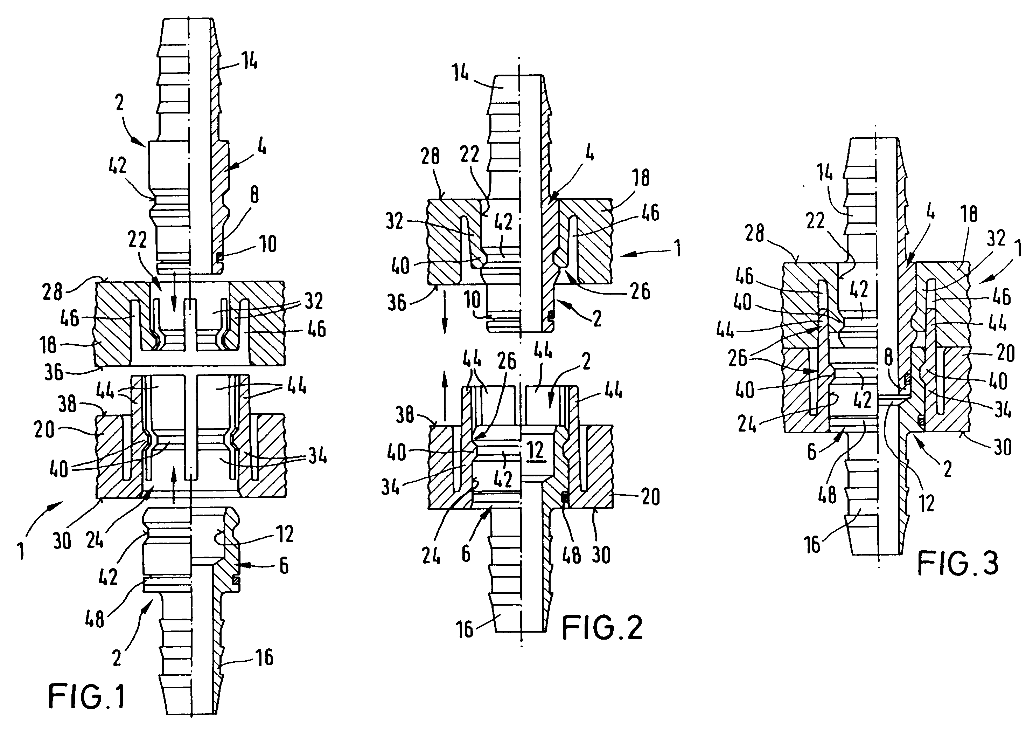

Eine erfindungsgemäße Kupplungseinrichtung 1 weist mindestens eine Steckkupplung 2 auf, die aus zwei Kupplungsteilen, und zwar einem Steckerteil 4 und einem Muffenteil 6, besteht. Das Steckerteil 4 besitzt einen Steckerschaft 8, der umfänglich insbesondere über einen in einer Außenringnut sitzenden Dichtring 10 abgedichtet in eine Steckaufnahme 12 des Muffenteils 6 einsteckbar ist (siehe hierzu Fig. 3).

Das Steckerteil 4 besitzt an seinem dem Steckerschaft 8 abgekehrten Ende einen insbesondere als üblicher Einschlagdorn ausgebildeten Anschlußstutzen 14, und das Muffenteil 6 weist einen der Steckaufnahme 12 axial abgekehrten, ebenfalls vorzugsweise als Einschlagdorn ausgebildeten Anschlußstutzen 16 auf. Diese Anschlußstutzen 14, 16 dienen zum Anschluß von nicht dargestellten Leitungen, insbesondere von Kunststoff-Rohrleitungen (vorzugsweise aus PA), indem jede Leitung auf einen der Anschlußstutzen 14, 16 aufgesteckt wird.

Die Kupplungseinrichtung 1 besitzt ferner zwei Kupplungsplatten 18, 20 zur Halterung und Arretierung der Kupplungsteile 4, 6 der Steckkupplung 2, wobei die eine Kupplungsplatte 18 eine Aufnahmeöffnung 22 für das Steckerteil 4 besitzt, während die andere Kupplungsplatte 20 eine Aufnahmeöffnung 24 für das Muffenteil 6 aufweist. Die Kupplungsplatten 18, 20 sind in einer im wesentlichen parallelen Anordnung miteinander so verbindbar (beispielsweise über nicht dargestellte Schraubverbindungen), daß die Aufnahmeöffnungen 22, 24 einander axial fluchtend gegenüberliegen und die in den Aufnahmeöffnungen 22, 24 sitzenden Kupplungsteile 2, 4 beim Zusammenfügen der Kupplungsplatten 18, 20 steckverbunden werden. Dies läßt sich anhand der Fig. 2 und 3 leicht nachvollziehen.

Erfindungsgemäß wird nun jedes Kupplungsteil 4, 6 über derart ausgebildete Rastmittel 26 (nur in Fig. 2 und 3 bezeichnet) in der zugehörigen Aufnahmeöffnung 22, 24 der jeweiligen Kupplungsplatte 18, 20 fixiert, daß es (das jeweilige Kupplungsteil 4 bzw. 6) einerseits bei getrennten Kupplungsplatten 18, 20 (s. hierzu Fig. 1 und 2) in die entsprechende Aufnahmeöffnung 22, 24 der jeweiligen Kupplungsplatte 18 bzw. 20 von deren der anderen Kupplungsplatte 20 bzw. 18 abgekehrten Rückseite 28, 30 her rastend und lösbar einsteckbar sowie andererseits im verbundenen Zustand der Kupplungsplatten 18, 20 - s. Fig. 3 - durch insbesondere selbsttätiges bzw. gegenseitiges Sperren der Rastmittel 26 unlösbar gehalten ist.

Im dargestellten, besonders vorteilhaften Ausführungsbeispiel der Erfindung weist jede Kupplungsplatte 18, 20 als Rastmittel 26 radial federelastische Rastarme 32 bzw. 34 auf, die jeweils über den Umfang der Aufnahmeöffnung 22 bzw. 24 verteilt angeordnet sind (und so praktisch die jeweilige Aufnahmeöffnung bilden) und sich dabei jeweils ausgehend von der Rückseite 28 bzw. 30 der Kupplungsplatte 18 bzw. 20 im wesentlichen in bzw. parallel zur Fügerichtung der Kupplungsteile 4, 6 erstrecken. Hierbei besitzen die Rastarme 32, 34 in ihrem zur Kupplungsseite 36 bzw. 38 der jeweiligen Kupplungsplatte 18, 20 weisenden, in radialer Richtung federelastisch beweglichen Bereich radial nach innen in die Aufnahmeöffnung 22 bzw. 24 ragende Rastansätze 40, die jeweils mit einer umfänglichen Ringnut 42 des jeweiligen Kupplungsteils 4 bzw. 6 rastend zusammenwirken. Hierbei ist nun ferner erfindungsgemäß vorgesehen, daß die Rastarme 34 der einen Kupplungsplatte - im dargestellten Beispiel diejenigen der das Muffenteil 6 aufnehmenden Kupplungsplatte 20 - in Fügerichtung weisende Sperransätze 44 aufweisen, die im miteinander verbundenen Zustand der Kupplungsplatten 18, 20 in axialer Richtung in einen die Rastarme 32 der anderen Kupplungsplatte 18 umschließenden Ringspalt 46 derart eingreifen, daß dann alle Rastarme 32, 34 beider Kupplungsplatten 18, 20 gegen eine radiale Bewegung abgestützt (gesperrt) sind. Dies läßt sich in der Fig. 3 gut erkennen. Die Sperransätze 44 stützen sich an einer den Ringspalt 46 nach außen begrenzenden, äußeren Ringfläche ab, und die Rastarme 32 stützen sich ihrerseits an den Innenflächen der Sperransätze 44 ab. Auf diese Weise können sich die Rastarme 32, 34 in dieser Stellung nicht radial nach außen bewegen, so daß die Kupplungsteile 4, 6 praktisch unlösbar gehalten sind. Ein Lösen ist aber durch Trennen der beiden Kupplungsplatten 18, 20 jederzeit möglich; ausgehend von dem in Fig. 2 dargestellten Zustand können die Kupplungsteile 4, 6 ohne weiteres unter Überwindung der Rastmittel 26 aus den Aufnahmeöffnungen 22, 24 herausgezogen werden.

In einer vorteilhaften Ausführungsform ist die erfindungsgemäße Kupplungseinrichtung als "Mehrfachkupplung" ausgebildet, wozu die Kupplungsplatten 18, 20 zur Halterung von mehreren Steckkupplungen 2 eine entsprechende Anzahl von gleichartigen Aufnahmeöffnungen 22, 24 aufweisen.

Für die eingangs erwähnte, bevorzugte Anwendung als Wandungsdurchführung von Druckmittelleitungen ist es vorteilhaft, wenn die Kupplungsplatten 18, 20 unter Zwischenlage eines Flächen-Dichtungselementes sowie unter Zwischenlage eines Öffnungsrandbereiches einer Wandung gegeneinander verspannbar sind. Insbesondere bei Anwendung in Fahrzeugen ist es zudem vorteilhaft, wenn die Kupplungsteile 4, 6 jeweils gegen die Aufnahmeöffnung 22, 24 umfänglich abgedichtet sind. Wie in der Zeichnung am Beispiel des Muffenteils 6 veranschaulicht ist, kann für diese Abdichtung das jeweilige Kupplungsteil 4, 6 in einer Außenringnut einen Dichtring 48 aufweisen, der im umfänglich geschlossenen, durchgehenden "Anbindungsbereich" der Rastarme 32 bzw. 34 angeordnet ist, d.h. im sich unmittelbar an die äußere, rückwärtige Mündung anschließenden Bereich der jeweiligen Aufnahmeöffnung 22 bzw. 24. Entgegen der zeichnerischen Darstellung kann eine derartige Abdichtung auch im Bereich des Steckerteils 4 vorgesehen sein.

Aufgrund der erfindungsgemäß vorgesehenen Rastmittel 26 und der sich hieraus ergebenden Raumform der Kupplungsplatten 18, 20 ist es besonders zweckmäßig, die Kupplungsplatten 18, 20 jeweils als einstückiges Formteil aus Kunststoff herzustellen.

Die Erfindung ist nicht auf die dargestellten und beschriebenen Ausführungsbeispiele beschränkt, sondern umfaßt auch alle im Sinne der Erfindung gleichwirkenden Ausführungen. Ferner ist die Erfindung bislang auch noch nicht auf die im Anspruch 1 definierte Merkmalskombination beschränkt, sondern kann auch durch jede beliebige andere Kombination von bestimmten Merkmalen aller insgesamt offenbarten Einzelmerkmalen definiert sein. Dies bedeutet, daß grundsätzlich praktisch jedes Einzelmerkmal des Anspruchs 1 weggelassen bzw. durch mindestens ein an anderer Stelle der Anmeldung offenbartes Einzelmerkmal ersetzt werden kann. Insofern ist der Anspruch 1 lediglich als ein erster Formulierungsversuch für eine Erfindung zu verstehen.

## Patentansprüche

1. Kupplungseinrichtung für Schlauch- und/oder Rohrleitungen, insbesondere für Wandungsdurchführungen von Druckmittelleitungen, mit mindestens einer aus zwei Kupplungsteilen, nämlich einem Steckerteil (4) und einem Muffenteil (6), bestehenden Steckkupplung (2) sowie mit zwei miteinander in einer im wesentlichen parallelen Anordnung verbindbaren Kupplungsplatten (18, 20), wobei die Kupplungsteile (4, 6) der bzw. jeder Steckkupplung (2) derart in fluchtend gegenüberliegenden Aufnahmeöffnungen (22, 24) der Kupplungsplatten (18, 20) sitzen, daß sie durch Verbinden der Kupplungsplatten (18, 20) dichtend in Fügerichtung ineinandergesteckt und in dieser Kupplungslage arretiert werden,
**dadurch gekennzeichnet,** daß jedes Kupplungsteil (4, 6) über derart ausgebildete Rastmittel (26) in der zugehörigen Aufnahmeöffnung (22, 24) der jeweiligen Kupplungsplatte (18, 20) fixiert wird, daß es einerseits bei getrennten Kupplungsplatten (18, 20) in die entsprechende Aufnahmeöffnung (22, 24) der jeweiligen Kupplungsplatte (18, 20) von deren der anderen Kupplungsplatte (20/18) abgekehrten Rückseite (28, 30) her rastend und lösbar einsteckbar sowie andererseits im verbundenen Zustand der Kupplungsplatten (18, 20) durch Sperren der Rastmittel (26) unlösbar gehalten ist.

2. Kupplungseinrichtung nach Anspruch 1,
**dadurch gekennzeichnet,** daß die Kupplungsplatten (18, 20) als Rastmittel (26) radial federelastische Rastarme (32, 34) aufweisen, die jeweils über den Umfang der Aufnahmeöffnung (22, 24) verteilt angeordnet sind und sich ausgehend von der Rückseite (28, 30) der Kupplungsplatte (18, 20) im wesentlichen in Fügerichtung der Kupplungsteile (4, 6) erstrecken.

3. Kupplungseinrichtung nach Anspruch 2,
**dadurch gekennzeichnet,** daß die Rastarme (32, 34) in ihrem zur Kupplungsseite (36, 38) der jeweiligen Kupplungsplatte (18, 20) weisenden Bereich radial nach innen in die Aufnahmeöffnung (22,24) ragende Rastansätze (40) aufweisen, die mit einer Ringnut (42) des jeweiligen Kupplungsteils (4, 6) rastend zusammenwirken.

4. Kupplungseinrichtung nach Anspruch 2 oder 3,
**dadurch gekennzeichnet,** daß die Rastarme (34) der einen Kupplungsplatte (20) in Fügerichtung weisende Sperransätze (44) aufweisen, die im verbundenen Zustand der Kupplungsplatten (18, 20) in einen die Rastarme (32) der anderen Kupplungsplatte (18) umschließenden Ringspalt (46) derart eingreifen, daß alle Rastarme (32, 34) beider Kupplungsplatten (18, 20) gegen eine radiale Bewegung gesperrt sind.

5. Kupplungseinrichtung nach einem oder mehreren der Ansprüche 1 bis 4,
**dadurch gekennzeichnet,** daß die Kupplungsplatten (18, 20) zur Halterung von mehreren Steckkupplungen (2) eine entsprechende Anzahl von Aufnahmeöffnungen (22, 24) aufweisen.

6. Kupplungseinrichtung nach einem oder mehreren der Ansprüche 1 bis 5,
**dadurch gekennzeichnet,** daß jede Kupplungsplatte (18, 20) als Formteil aus Kunststoff ausgebildet ist.

7. Kupplungseinrichtung nach einem oder mehreren der Ansprüche 1 bis 6,
**dadurch gekennzeichnet,** daß die Kupplungsplatten (18, 20) insbesondere über Schraubverbindungen sowie vorzugsweise unter Zwischenlage eines Dichtungselementes gegeneinander verspannbar sind.

8. Kupplungseinrichtung nach einem oder mehreren der Ansprüche 1 bis 7,
**dadurch gekennzeichnet,** daß das Steckerteil (4) und/oder das Muffenteil (6) gegen die Aufnahmeöffnung (22, 24) der jeweiligen Kupplungsplatte (18, 20) umfänglich abgedichtet sind/ist.

9. Kupplungseinrichtung nach einem oder mehreren der Ansprüche 1 bis 8,
**dadurch gekennzeichnet,** daß die Kupplungsteile (4, 6) jeweils einen Anschlußstutzen (14, 16), insbesondere einen Einschlagdorn zum Aufstecken einer Leitung, insbesondere eines Kunststoff-Rohres, aufweisen.

## Claims

1. A coupling means for hose and/or pipe lines, in particular for guiding pressurized medium lines through walls, having at least one plug-type coupling (2) comprising two coupling parts, namely a plug part (4) and a socket part (6), and having two coupling plates (18, 20) which may be connected to one another in a substantially parallel arrangement, the coupling parts (4, 6) of the or each plug-type coupling (2) being seated in receiving openings (22, 24) in the coupling plates (18, 20) which oppose one another in flush manner in such a way that, by connecting the coupling plates (18, 20), they are plugged into one another in sealing manner in the direction of joining and are locked in this coupled position, characterized in that each coupling part (4, 6) is fixed in the associated receiving opening (22, 24) in the respective coupling plate (18, 20) by way of latching means (26) which are constructed such that each coupling part (4, 6) is on the one hand, when the coupling plates (18, 20) are separated, capable of being plugged in latching and detachable manner into the corresponding receiving opening (22, 24) in the respective coupling plate (18, 20) from the rear side (28, 30) thereof, remote from the other coupling plate (20/18), and on the other hand, in the connected state of the coupling plates (18, 20), is held non-detachably by the blocking action of the latching means (26).

2. A coupling means according to Claim 1, characterized in that the coupling plates (18, 20) have as the latching means (26) latching arms (32, 34) which are radially elastic in the manner of springs, are each arranged distributed over the periphery of the receiving opening (22, 24) and extend, starting from the rear side (28, 30) of the coupling plate (18, 20), substantially in the direction of joining the coupling parts (4, 6).

3. A coupling means according to Claim 2, characterized in that the latching arms (32, 34) have, in their region pointing towards the coupling side (36, 38) of the respective coupling plate (18, 20), latching shoulders (40) which project radially inwards into the receiving opening (22, 24) and cooperate in latching manner with an annular groove (42) in the respective coupling part (4, 6).

4. A coupling means according to Claim 2 or 3, characterized in that the latching arms (34) of the one coupling plate (20) have blocking shoulders (44) which point in the direction of joining and, in the connected state of the coupling plates (18, 20), engage in an annular gap (46) surrounding the latching arms (32) of the other coupling plate (18) in a manner such that all the latching arms (32, 34) of both coupling plates (18, 20) are blocked to prevent radial movement.

5. A coupling means according to one or more of Claims 1 to 4, characterized in that, for mounting a plurality of plug-type couplings (2), the coupling plates (18, 20) have a corresponding number of receiving openings (22, 24).

6. A coupling means according to one or more of Claims 1 to 5, characterized in that each coupling plate (18, 20) is constructed as a moulded part of synthetic material.

7. A coupling means according to one or more of Claims 1 to 6, characterized in that the coupling plates (18, 20) may be clamped against one another, in particular by way of screw connections, and preferably with the interposition of a sealing element.

8. A coupling means according to one or more of Claims 1 to 7, characterized in that the plug part (4) and/or the socket part (6) is/are sealed peripherally with respect to the receiving opening (22, 24) of the respective coupling plate (18, 20).

9. A coupling means according to one or more of Claims 1 to 8, characterized in that the coupling parts (4, 6) each have a connecting branch (14, 16), in particular a drive-in spike onto which a line, in particular a synthetic pipe, can be pushed.

## Revendications

1. Dispositif de raccordement pour tuyaux flexibles et/ou tuyaux rigides, en particulier pour la traversée murale de conduites d'agents sous pression, ce dispositif comportant au moins un moyen d'accouplement par enfichage (2) en deux parties, à savoir un élément de fiche (4) et un élément de douille (6), ainsi que deux plaques d'accouplement (18, 20) pouvant être reliées entre elles pour former un agencement sensiblement parallèle, les éléments d'accouplement (4, 6) du moyen ou de chaque moyen d'accouplement par enfichage (2) étant disposés dans des ouvertures d'accueil (22, 24), alignées en regard, des plaques d'accouplement (18, 20) de manière à ce qu'il soient emboîtées l'un dans l'autre de manière étanche dans la direction d'assemblage et verrouillées dans cette position d'accouplement lorsqu'on relie entre elles les plaques d'accouplement (18, 20),
caractérisé en ce que chaque élément d'accouplement (4, 6) est fixé dans l'ouverture d'accueil correspondante (22, 24) de la plaque d'accouplement respective (18, 20) par des moyens d'arrêt (26) réalisés de manière à ce que l'élément d'accouplement puisse d'une part être enfiché de manière verrouillable et amovible dans l'ouverture d'accueil correspondante (22, 24) de la plaque d'accouplement respective (18, 20) depuis la face arrière (28, 30) d'une plaque opposée à l'autre plaque d'accouplement (20, 18), lorsque les plaques d'accouplement (18, 20) sont séparées, et qu'il soit d'autre part maintenu de manière inamovible, grâce à un verrouillage des moyens d'arrêt (26), lorsque les plaques d'accouplement (18, 20) sont reliées entre elles.

2. Dispositif de raccordement selon la revendication 1,
caractérisé en ce que les plaques d'accouplement (18, 20) présentent en tant que moyens de verrouillage (26) des bras d'arrêt (32, 34) élastiques dans la direction radiale, répartis sur la périphérie de l'ouverture d'accueil (22, 24), et s'étendant à partir de la face arrière (28, 30) de la plaque d'accouplement (18, 20) sensiblement dans la direction d'assemblage des éléments d'accouplement (4, 6).

3. Dispositif de raccordement selon la revendication 2,
caractérisé en ce que les bras d'arrêt (32, 34) présentent dans leur région orientée vers la face d'accouplement (36, 38) de la plaque d'accouplement respective (18, 20) des prolongements d'arrêt (40) faisant saillie vers l'intérieur de l'ouverture d'accueil (22, 24), ces prolongements coopérant de manière encliquetable avec une rainure annulaire (42) de l'élément d'accouplement respectif (4, 6).

4. Dispositif de raccordement selon la revendication 2 ou 3,
caractérisé en ce que les bras d'arrêt (34) de l'une des plaques d'accouplement (20) présentent des prolongements de verrouillage (44) orientés dans la direction d'assemblage, ces prolongements s'insérant, lorsque les plaques d'accouplement (18, 20) sont reliées entre elles, dans une fente annulaire (46) qui entoure les bras d'arrêt (32) de l'autre plaque d'accouplement (18) de manière telle que tous les bras d'arrêt (32, 34) des deux plaques d'accouplement (18, 20) soient verrouillés pour empêcher un déplacement radial.

5. Dispositif de raccordement selon l'une ou plusieurs des revendications 1 à 4,
caractérisé en ce que, pour maintenir plusieurs moyens d'accouplement par enfichage (2), les plaques d'accouplement (18, 20) présentent un nombre correspondant d'ouvertures d'accueil (22, 24).

6. Dispositif de raccordement selon l'une ou plusieurs des revendications 1 à 5,
caractérisé en ce que chaque plaque d'accouplement (18, 20) est réalisée sous la forme d'une pièce moulée en une matière synthétique.

7. Dispositif de raccordement selon l'une ou plusieurs des revendications 1 à 6,
caractérisé en ce que les plaques d'accouplement (18, 20) peuvent être déformées l'une par rapport à l'autre, en particulier au moyen de liaisons par vis, de préférence en intercalant un élément d'étanchéité.

8. Dispositif de raccordement selon l'une ou plusieurs des revendications 1 à 7,
caractérisé en ce que la périphérie de l'élément de fiche (4) et/ou de l'élément de douille (6) est étanchée par rapport à l'ouverture d'accueil (22, 24) de la plaque d'accouplement (18, 20).

9. Dispositif de raccordement selon l'une ou plusieurs des revendications 1 à 8,
caractérisé en ce que les éléments d'accouplement (4, 6) présentent respectivement un manchon de raccordement (14, 16), en particulier un goujon d'enfoncement pour emboîter une conduite, en particulier un tube en une matière synthétique.
